# NEW EUROPEAN PATENT SPECIFICATION

(11) **EP 0 281 820 B2**
(45) Date of publication and mention of the opposition decision: **07.02.1996**
(45) Mention of the grant of the patent: 09.12.1992
(21) Application number: 88102454.1
(22) Date of filing: 19.02.1988
(51) Int. Cl.: B65H 5/06, B65H 3/06, B41L 21/02, G03B 27/62, G03G 15/00

(54) **Paper transport system**
Papiertransportsystem
Système de transport de papier

(30) Priority: 23.02.1987 JP 25947/87 U
(43) Date of publication of application: 14.09.1988
(73) Proprietor: SHARP KABUSHIKI KAISHA, Osaka 545 (JP)
(72) Inventor: Tanaka, Hironori, Nara-shi Nara-ken (JP); Shirakoshi, Hiroshi, Nara-shi Nara-ken (JP)
(74) Representative: TER MEER - MÜLLER - STEINMEISTER & PARTNER

(56) References cited:
- DE-A- 3 439 844
- JP-A- 523 321
- US-A- 3 330 179
- US-A- 4 457 507
- PATENT ABSTRACTS OF JAPAN vol. 10, no. 261 (M-514) 2317 05 September 1986, & JP-A-61 086329 (RICOH CO)

## Description

The present invention relates to a paper transport system for a facsimile device, a copying machine, an optical character reading equipment, etc. for use in supplying manuscripts with information thereon or documents for reproduction separately one by one from a stack of multiple sheets to an information reading or reproducing block.

The typical conventional paper transport system intended for this purpose sends papers such as manuscripts from a stack of papers set on a hopper onto a transport passage by means of the rotation of a forwarding roller and the pressure of a pressure roller or a pressure leaf spring.

In the above conventional paper transport system, however, papers are carried between transport rollers with driving rollers positioned only on the lower side so that transmission force is applied on one side of the papers, possibly damaging the papers. Moreover, when a manuscript is being transmitted in a carrier sheet, the transparent cover sheet may be deviated from the base sheet.

US-A-3 330 179 discloses a paper transport system for supplying documents for reproduction in a photocopying apparatus. This paper transport system comprises two sets of paper transport rollers staggered along a paper transport path, each set comprising a driving roller and a driven roller. The driving rollers of these two sets are alternately positioned on the lower and upper sides of the paper transport path. A conveyor belt is disposed between the two sets of rollers for taking over the documents from the first set, conveying them past an imaging station and feeding them to the second set of rollers. The information reading block is formed by projection lamps and an optical system disposed at a distance from the imaging station.

DE-A-34 39 844 discloses a paper transport system wherein the papers are supplied to the paper transport passage through a gap between a paper feed roller and a separation rubber plate pressed against the paper feed roller by means of a spring.

The object of the present invention is to provide a paper transport system for supplying papers past a contact type image sensor, in which driving rollers and driven rollers are staggered so that the driving rollers are positioned on the upper and lower sides alternately to apply transmission force on both sides of the papers, thereby preventing the papers from being damaged or preventing the transparent cover sheet of a carrier sheet from deviating from the base sheet when the carrier sheet is used in supplying a manuscript.

According to the present invention, this object is achieved with the features indicated in claim 1. Further improvements of the invention are specified in claim 2.

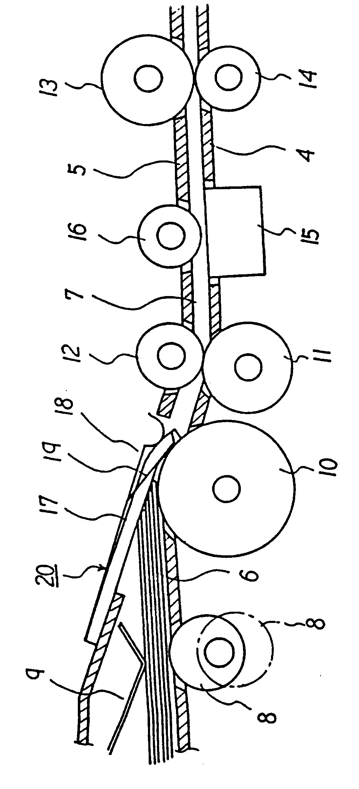

The present invention will become more fully understood from the detailed description given hereinbelow and the accompanying drawings which are given by way of illustration only, and thus are not limitative of the present invention and wherein the single figure is a vertical sectional view of an embodiment of the paper transport system of the present invention.

An embodiment of the present invention is described in detail below with reference to the accompanying drawing.

A paper transport passage 7 for guiding papers 6 such as manuscripts comprises a lower paper guide plate 4 and an upper paper guide plate 5. Along the paper travelling direction of the paper transport passage 7 are arranged a forwarding roller 8 comprising an eccentric roller, a pressure leaf spring 9 for pressing papers 6 against the forwarding roller 8, a paper feed roller 10, a first driving roller 11, a first driven roller 12 pressed by a leaf spring (not shown) against the first driving roller 11, a second driving roller 13 and a second driven roller 14 pressed by another leaf spring (not shown) against the second driving roller 13. Between the first and second driving rollers 11 and 13 are positioned a contact type image sensor 15 for reading information on each paper 6 and a pressure roller 16 for pressing the paper 6 against the image sensor 15.

A separation rubber plate 17 having a high wear resistance is mounted above the paper feed roller 10 with one end fixed on the upper paper guide plate 5 and the other end held in contact with the paper feed roller 10 so as to send papers separately one by one. A leaf spring 20 is overlaid on the upper side of the separation rubber plate 17. The leaf spring 20 has slits to form a separation spring 18 in the center and a pair of feed springs 19 on both sides of the separation spring 18. The separation spring 18 is bent to provide a specified spring force thereby to press the separation rubber plate 17 against the paper feed roller 10. The feed springs 19 are bent to provide such spring force as to allow the paper 6 to be transmitted smoothly by the paper feed roller 10.

The driving rollers 11 and 13 and the driven rollers 12 and 14 of the paper transport rollers are staggered in such a manner that supposing the driving roller 11 is positioned on the lower side, the driving roller 13 is positioned on the upper side.

Consequently, transmission force is applied on each paper from the lower and the upper sides alternately, so that it is possible to protect papers against damage and to prevent the transparent cover sheet of a carrier sheet from being deviated from the base sheet when the carrier sheet is used in transmitting a manuscript.

In the paper transport system of the present invention, a stack of papers such as manuscripts set a hopper is sent onto the paper transport passage by means of the rotation of the forwarding roller and the pressure of the pressure leaf spring. Then, a paper is separated from the stack of papers by the paper feed roller and the separation spring, and sent between the first driving roller (lower) and the first driven roller (upper) of the paper transport rollers to the optical reading device where the information on the paper is read optically. Then, the paper is discharged as it is transmitted between the second driving roller (upper) and the second driven roller (lower).

As understood from the above, since the transmission force is applied on both sides of the paper, the paper is not damaged and, when a carrier sheet is used in transmitting a paper, the transparent cover sheet thereof is never deviated from the base sheet.

While only certain embodiments of the present invention have been described, it will be apparent to those skilled in the art that various changes and modifications may be made therein without departing from the scope of the present invention as claimed.

## Claims

1. A paper transport system for supplying manuscripts with information thereon or documents for reproduction separately one by one past an information reading or reproducing block including a contact type image sensor (15), said paper transport system comprising a plurality of sets (11,12;13,14) of paper transport rollers staggered along a paper transport path (7), each set comprising a driving roller (11,13) and a driven roller (12,14), **characterized** in that said contact type image sensor (15) is positioned between two of said sets (11,12 and 13,14) of paper transport rollers, the driving rollers (11,13) being alternately positioned on the lower and upper sides of the paper transport path (7) in order to apply a transmission force on both sides of a manuscript and a pressure roller (16) is pressing the manuscripts (6) against the image sensor.

2. A paper transport system according to claim 1, wherein the papers (6) which are transmitted in the paper transport passage (7) are supplied separately one by one through a gap between a paper feed roller (10) and a separation rubber plate (17) pressed against said paper feed roller (10) by means of a separation leaf spring (20).

## Patentansprüche

1. Papiertransportsystem zur getrennten Zufuhr von Manuskripten mit darauf enthaltener Information oder von zu vervielfältigenden Dokumenten eins nach dem anderen an einem Informationsleseblock oder -aufzeichnungsblock vorbei, der einen Kontaktbildsensor (15) enthält, wobei das Papiertransportsystem mehrere Sätze (11,12;13,14) von längs einer Papiertransportbahn (7) gestaffelten Papiertransportrollen aufweist und jeder Satz eine Antriebsrolle (11,13) und eine angetriebene Rolle (12,14) enthält, dadurch **gekennzeichnet**, daß der Kontaktbildsensor (15) zwischen zwei Sätzen (11,12 und 13,14) der Papiertransportrollen angeordnet ist, wobei die Antriebsrollen (13,14) abwechselnd auf der Unterseite und der Oberseite der Papiertransportbahn (7) angeordnet sind, so daß auf beiden Seiten eines Manuskriptes (6) eine Transmissions-Kraft ausgeübt wird, und das Manuskript (6) durch eine Druckrolle (16) an den Bildsensor gedrückt wird.

2. Papiertransportsystem nach Anspruch 1, bei dem die Papiere (6), die in der Papiertransportbahn (7) transportiert werden, getrennt eins nach dem anderen durch eine Spalt zwischen einer Papier-Zufuhrrolle (10) und einer Vereinzelungs-Gummiplatte (17) hindurchgeführt werden, die durch eine Vereinzelungs-Blattfeder (20) gegen die Papier-Zufuhrrolle (10) angedrückt wird.

## Revendications

1. Système de transport de papier pour faire avancer des manuscrits comportant des informations ou des documents à reproduire, séparément et un à un, devant un bloc de lecture ou de reproduction d'informations comportant un détecteur d'image (15) du type à contact, ledit système de transport de papier comprenant plusieurs jeux (11, 12; 13, 14) de rouleaux de transport de papier disposés de façon décalée le long d'un trajet de transport de papier (7), chaque jeu comprenant un rouleau d'entraînement (11, 13) et un rouleau entraîné (12, 14), caractérisé en ce que ledit détecteur d'image (15) du type à contact est positionné entre deux desdits jeux (11, 12 et 13, 14) de rouleaux de transport de papier, les rouleaux d'entraînement (11, 13) étant disposés alternativement sur les côtés inférieur et supérieur du trajet de transport de papier (7) afin d'appliquer une force de transmission sur les deux faces d'un manuscrit, et un rouleau presseur (16) pressant les manuscrits (6) contre le détecteur d'image.

2. Système de transport de papier selon la revendication 1, dans lequel les feuilles de papier (6) qui sont transmises dans le passage de transport de papier (7) sont avancées séparément une à une à travers un intervalle existant entre un rouleau d'avance de papier (10) et une plaque de séparation en caoutchouc (17) pressée contre ledit rouleau d'avance de papier (10) au moyen d'un ressort de séparation à lame (20).
